# EUROPÄISCHE PATENTSCHRIFT

(11) **EP 3 247 602 B1**
(45) Veröffentlichungstag und Bekanntmachung des Hinweises auf die Patenterteilung: **21.11.2018**
(21) Anmeldenummer: 16700685.7
(22) Anmeldetag: 13.01.2016
(51) Int. Cl.: B60T 15/18

(54) **BREMSMODULATOR FÜR EIN DRUCKLUFT-BREMSSYSTEM EINES FAHRZEUGS**
BRAKE MODULATOR FOR THE PNEUMATIC BRAKE SYSTEM OF A VEHICLE
MODULATEUR DE FREINS POUR UN SYSTÈME DE FREINS POUR VÉHICULE

(30) Priorität: 22.01.2015 DE 102015000763
(43) Veröffentlichungstag der Anmeldung: 29.11.2017
(73) Patentinhaber: WABCO GmbH, 30453 Hannover (DE)
(72) Erfinder: LÜCHAU, Karsten-Wilhelm, 29331 Lachendorf (DE); SIEKER, Armin, 33611 Bielefeld (DE); STEPHAN, Arne, 30177 Hannover (DE); WICHMANN, Olaf, 30974 Wennigsen (DE)
(74) Vertreter: Lauerwald, Jörg
(86) Internationale Anmeldenummer: PCT/EP2016/000049
(87) Internationale Veröffentlichungsnummer: WO 2016/116260

(56) Entgegenhaltungen:
- EP-A2- 0 319 670
- EP-A2- 2 266 854
- US-A- 4 145 091

## Beschreibung

Die Erfindung betrifft einen Bremsmodulator für ein Druckluft-Bremssystem, wobei der Bremsmodulator insbesondere für ein Anhänger-Bremssystem eines Anhängerfahrzeugs einsetzbar ist. Die Erfindung betrifft zudem ein Druckluft-Bremssystem mit einem solchen Bremsmodulator. Der Bremsmodulator weist hierbei zwei Relaisventile zur Druckluft-Mengenverstärkung auf und wird im Allgemeinen von einer Ventilschaltung, z. B. einer elektropneumatischen ABS-Steuerschaltung, angesteuert.

Die beiden Relaisventile können somit z. B. die linke Radbremse und rechte Radbremse einer Anhänger-Achse unabhängig voneinander mit Druckluft versorgen. Indem die beiden Relaisventile gemeinsam in dem Bremsmodulator aufgenommen sind, kann ein gemeinsamer Druckluft-Anschluss vorgesehen sein, der direkt an eine Druckluftversorgung, z. B. einen Druckluftspeicher des Fahrzeugs, angeschlossen ist. Die beiden Relaisventile können jeweils einen pneumatischen Steuereingang aufweisen, wobei den Relaisventilen von der z. B. elektropneumatischen ABS- Steuerschaltung ein erster und zweiter Steuerdruck zugeführt wird.

Die Anbringung des Bremsmodulators ist nach unterschiedlichen Systemen und Normen international verschieden, wobei sowohl ein direkter Anschluss an einen Druckluftspeicher als auch der Anschluss über eine pneumatische Leitung bekannt sind. Somit ist es vorteilhaft, den Bremsmodulator mit zwei Druckluft-Anschlüssen, die beide jeweils als Druckluft-Eingang für beide Relaisventile dienen, auszustatten. Der nicht benötigte Druckluft-Anschluss kann z. B. durch einen Stopfen verschlossen werden, wobei grundsätzlich auch der parallele Anschluss beider Druckluft-Anschlüsse möglich ist.

Die beiden Relaisventile können in einer Längsrichtung bzw. Axialrichtung eines gemeinsamen Hauptgehäuses angeordnet werden, das als Aluminium-Druckgusskörper ausgebildet ist. Beide Relaisventile können hierbei unabhängig voneinander ihre drei Ventilstellungen, d. h. Belüftungsstellung, Druckhaltenstellung und Entlüftungsstellung, einnehmen. Somit ist ein kompakter Aufbau mit einem hohen Luftstrom möglich. Die Luftzufuhr kann insbesondere in einer Querrichtung (senkrecht zur Axialrichtung) mittig zu den Drucklufteingängen der Relaisventile erfolgen.

Es zeigt sich jedoch, dass sich bei einem derartigen konstruktiven Aufbau mit in Querrichtung vorgesehenen Druckluft-Anschluss eine komplexe Formgebung des Hauptgehäuses ergibt. Die sich von dem Druckluftanschluss aus zu einem Belüftungs-Ventilsitz erstreckenden Belüftungs- Kanäle werden daher im Allgemeinen durch Hinterschneidungen oder ähnlich komplexe Kanalausbildungen im Aluminium-Druckgusskörper des Hauptgehäuses ausgebildet.

Weiterhin werden die beiden gemeinsamen Druckluft-Anschlüsse von gegenüber liegenden Seiten und in Axialrichtung zueinander versetzt ausgebildet; eine derartige pneumatische Zuführung ist jedoch im Allgemeinen unsymmetrisch zu den beiden Relaisventilen, so dass die Relaisventile ggf. einen unterschiedlichen Druckaufbau zeigen können.

EP 0 319 670 A2 offenbart eine Relaisventileinrichtung mit zwei bezüglich ihrer Längsachse parallel zueinander in einem Gehäuse angeordneten Relaisventilen.

EP 2 266 854 A2 offenbart ein Relaisventil für eine Druckluftanlage, insbesondere Druckluftbremsanlage eines Nutzfahrzeugs, wobei das Relaisventil ein Gehäuse, einen in dem Gehäuse verschiebbar angeordneten Relaisventilkolben mit einem Relaisventilkolbenloch und einen den Relaisventilkolben in dem Gehäuse einschließenden Relaisventildeckel mit einem Relaisventildeckelloch aufweist. Der Erfindung liegt die Aufgabe zugrunde, einen Bremsmodulator für ein Druckluft-Bremssystem sowie ein derartiges Druckluft-Bremssystem zu schaffen, die bei geringen Kosten eine sichere Funktionalität gewährleisten.

Diese Aufgabe wird durch einen Bremsmodulator nach Anspruch 1 und ein Druckluft-Bremssystem mit einem derartigen Bremsmodulator gelöst. Die Unteransprüche beschreiben bevorzugte Weiterbildungen.

Somit ist jedes der beiden Relaisventile mit einem Einsatz-Führungskörper ausgebildet, der einen Belüftungs-Kanal von dem Druckluft-Anschluss zu dem Belüftungs-Ventilsitz aufweist. Insbesondere können zwei Druckluft-Anschlüsse in Querrichtung, d.h. senkrecht zur Axialrichtung, gegenüber liegend angeordnet und durch eine Querbohrung miteinander verbunden sein, so dass die Belüftungs-Kanäle jeweils von der Querbohrung ausgehen.

Der Einsatz-Führungskörper kann insbesondere als Kunststoff-Teil, vorzugsweise als Kunststoff-Spritzgussteil ausgebildet sein; vorteilhafterweise liegt er mit seiner Außenfläche an der Axialbohrung des Hauptgehäuses an und bildet radial nach innen, z. B. zu einer inneren Wand oder mittleren Wand, den Belüftungs-Kanal aus. Radial innen kann er wiederum einen Entlüftungskanal von dem Entlüftungs-Ventilsitz zu dem Entlüftungs-Ausgang bereitstellen.

Somit können relevante Funktionen des Relaisventils durch den Einsatz-Führungskörper ausgebildet werden, der vorteilhafterweise zur Führung eines Ventilkörpers dient, der wiederum zur Ausbildung sowohl des Belüftungs-Ventilsitzes als auch des Entlüftungs-Ventilsitzes vorgesehen ist. Der Ventilkörper ist somit auf dem Einsatz-Führungskörper gleitend geführt, z. B. mit einer Federvorspannung durch eine in dem Einsatz-Führungskörper aufgenommene und den Ventilkörper axial nach außen drückende Feder.

Indem wesentliche Funktionen des Relaisventils durch den Einsatz-Führungskörper realisiert werden, kann die Axialbohrung bzw. Längsbohrung in dem Hauptgehäuse konstruktiv einfacher, insbesondere ohne Hinterschneidung, ausgebildet sein. Die Fertigung ist somit sehr einfach und kostengünstig, indem eine Axialbohrung oder Längsbohrung ausgebildet wird und eine die Axialbohrung senkrecht schneidende Querbohrung, vorteilhafterweise mit sich verbreiternden Druckluft-Anschlüssen. Zusätzlich zu der Vereinfachung der Herstellung kann auch eine symmetrische Ausbildung bezüglich des ersten und zweiten Relaisventils gestaltet werden; die beiden Relaisventile mit ihrem Einsatz-Führungskörper können sich somit von der mittigen, zentralen Querbohrung symmetrisch axial nach außen erstrecken.

Hierdurch wird der Vorteil einer symmetrischen Druckausbildung und eines gleichmäßigen Druckaufbaus zu beiden Seiten hin erreicht. So kann z. B. an jedem der Druckluftanschlüsse zunächst eine Zuführung der Druckluft in Querrichtung zur axialen Mitte, und dann symmetrisch links und rechts nach außen durch die Relaisventile erreicht werden.

Weiterhin ist die Nachbearbeitung einfacher oder kann ganz wegfallen, da relevante Flächen durch die Einsatz-Führungskörper statt durch Metallflächen des Druckgusskörpers ausgebildet werden.

Die weitere Ausbildung der Ventilsitze kann durch einen axial von außen einwirkenden, in Axialrichtung verstellbaren Ventilkolben erfolgen, der auf den Ventilkörper drückt und hierdurch den Entlüftungs-Ventilsitz ausbildet. Indem der Ventilkolben den Ventilkörper axial nach innen drückt, öffnet er weiterhin den Belüftungs-Ventilsitz, der z. B. zwischen dem Ventilkörper und einem Ventilsitz-Ring ausgebildet sein kann.

Der Ventilkolben kann z. B. in einem axial von außen aufgesetzten Deckel aufgenommen und axial geführt sein. Somit ist auch diese Ausbildung konstruktiv einfach und durch Aufsetzen von außen einfach montierbar.

Die Montage kann somit zunächst durch Ausbildung des Hauptgehäuses als Aluminium-Druckguss-Körper, mit z. B. einem oder zwei axialen Schiebern zur Ausbildung der Axialbohrung, sowie einem oder zwei mittigen Schiebern zur Ausbildung der Querbohrung erfolgen, vorteilhafterweise mit der radial äußeren Verbreiterung der Druckluftanschlüsse. Für diese Ausbildung der Bohrung sind grundsätzlich keine Nachbearbeitungen erforderlich, da hier keine beweglichen Teile aufgenommen sind. Die Einsatz-Führungskörper können dann axial von außen her in die Axialbohrung eingesetzt werden, vorteilhafterweise über Dichtmittel wie Dichtringe, vorteilhafterweise bereits mit aufgenommener Feder und Ventilkörper. Nachfolgend wird von außen der Ventilsitz-Ring montiert und die Einheit aus Deckel mit Ventilkolben in einfacher Weise aufgesetzt und z. B. durch Schrauben befestigt.

Das gesamte Druckluft-Bremssystem kann somit einen derartigen, die beiden Relaisventile ausbildenden Bremsmodulator aufweisen, zusammen mit einer elektropneumatischen ABS-Steuerschaltung.

Die Erfindung wird im Folgenden anhand der beiliegenden Zeichnungen an einer beispielhaften Ausführungsform näher erläutert. Es zeigen:
- Fig. 1: einen Bremsmodulator in geschnittener Darstellung gemäß einer Ausführungsform der Erfindung, mit einem betätigten Relaisventil in Belüftungsstellung und einem unbetätigten Relaisventil in Entlüftungsstellung, und
- Fig. 2: ein elektropneumatisches Schaltschema mit dem Bremsmodulator aus Fig. 1.

In der Ausführungsform entsprechen sich Merkmale und Elemente mit ähnlichen oder gleichen Bezugszeichen, insbesondere bei Beschreibung der beiden Ventile.

Ein Bremsmodulator 1 dient als ABS-Bremsmodulator 1 und weist die Funktionalität von zwei pneumatisch angesteuerten Relaisventilen 2 und 3 auf, von denen ein erstes Relaisventil 2 einen an eine pneumatische Steuerdruck-Leitung 4 angeschlossenen pneumatischen Steuerdruck- Eingang 2a, weiterhin einen Druckluft-Ausgang 2b, an den eine Bremsleitung 6 angeschlossen ist, und eine Entlüftung 2c aufweist, und entsprechend ein zweites Relaisventil 3 einen pneumatischen Steuereingang 3a, an den eine pneumatische Steuerleitung 5 angeschlossen ist, weiterhin einen Druckluft-Ausgang 3b zu einer Bremsleitung 7, und eine Entlüftung 3c aufweist.

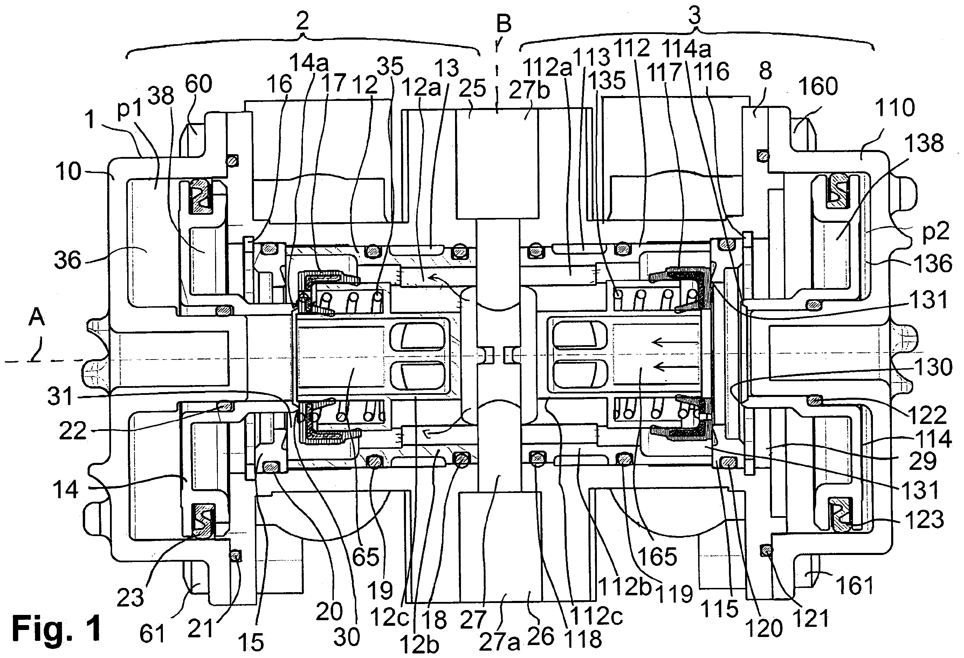

Der Bremsmodulator 1 weist in seinem Aufbau gemäß Fig. 1 ein Hauptgehäuse 8, einen ersten Deckel 10 als Teil des ersten Relaisventils 2, und einen zweiten Deckel 110 als Teil des zweiten Relaisventils 3 auf. In der weiteren Beschreibung entsprechen sich die Bezugszeichen der Elemente des ersten und zweiten Relaisventils 2, 3, so dass jeweils nur auf eines der unterschiedliche Stellungen zeigenden Relaisventile 2, 3 detailliert eingegangen wird, die Angaben aber jeweils auch für das andere Ventil 2 oder 3 gelten.

In dem Hauptgehäuse 8 weist das erste Relaisventils 2 einen ersten Einsatz-Führungskörper 12, einen ersten Ventilkolben 14, einen Ventilsitz-Ring 15 mit Sicherungs-Ring 16 sowie Dichtmittel 18, 19, 20, 21, 22, 23 auf. Entsprechend sind als Teil des zweiten Relaisventils 3 ein zweiter Einsatz- Führungskörper 112, ein zweiter Ventilkolben 114, einen Sicherungs-Ring 116 und Dichtmittel 118, 119, 120, 121, 122 und 123 vorgesehen.

Wie bereits aus Fig. 1 ersichtlich ist, ist der Aufbau bzw. Hardware-Aufbau der Relaisventile 2 und 3 spiegelsymmetrisch zu einer Mittel-Achse B, die wiederum senkrecht auf der Gehäuse-Achse und Symmetrieachse A steht. Der gesamte Bremsmodulator 1 ist hierbei im Wesentlichen symmetrisch zur Symmetrieachse A, mit entsprechender Ausbildung von Öffnungen usw. als Strukturierungen in Umfangsrichtung um die Symmetrieachse A.

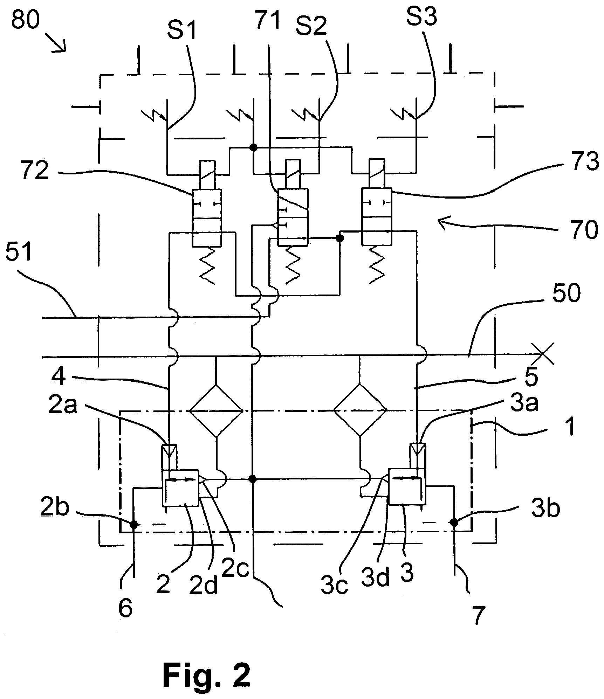

Gemäß der gezeigten bevorzugten Ausführungsform der Fig. 1 weist das Hauptgehäuse 8 zwei Druckluft-Eingangsanschlüsse 25, 26 auf, von denen im Allgemeinen lediglich einer erforderlich ist; somit kann einer der beiden Druckluft-Eingangsanschlüsse 25, 26 z. B. durch einen Stopfen verschlossen werden. Hierdurch wird eine vielseitige Einsetzbarkeit gewährleistet. Die Druckluft-Eingangsanschlüsse 25 und 26 können hierbei jeweils als gemeinsamer Druckluft-Eingangsanschluss 2d und 3d für beide Relaisventile 2 und 3 dienen und somit gemäß Fig. 2 an eine gemeinsame Druckluft- Versorgungsleitung 50 angeschlossen werden. Hierdurch wird insbesondere eine Vielseitigkeit beim Anschluss des Bremsdruck-Modulators 1 ermöglicht, z. B. gemäß üblicher Bauweisen in den USA und Europa; so kann der Bremsdruck-Modulator 1 mit der zusätzlichen Druckluftleitung 50 oder auch z. B. direkt an einen Druckluftspeicher angeschlossen werden, so dass die Länge der Druckluft-Versorgungsleitung 50 faktisch bis auf Null reduzierbar ist. Die beiden Druckluft-Eingangsanschlüsse 25 und 26 sind hierbei symmetrisch zur Achse B, d.h. einander gegenüberliegend angeordnet, so dass insbesondere auch die pneumatischen Wege von jedem der Druckluft- Eingangsanschlüsse 25 und 26 zu jedem der beiden Relaisventile 2 und 3 jeweils gleich lang sind.

Das in Fig. 1 links der Achse B gezeigte erste Relaisventil 2 ist in der Belüftungsstellung, d. h. der betätigten Stellung, gezeigt; das in Fig. 1 rechts der Achse B gezeigte zweite Relaisventil 3 ist hingegen in der Entlüftungsstellung, d. h. seiner unbetätigten Grundstellung, gezeigt.

Nachfolgend wird zunächst der Betrieb auf Grundlage des ersten Relaisventils 2 beschrieben. Der Druckluft-Eingangsanschluss 25 und/oder 26 ist an die Druckluft-Versorgungsleitung 50 angeschlossen und wird durch eine sich entlang der Achse B durch das Hauptgehäuse 8 erstreckende mittlere Bohrung 27 und an deren Enden ausgebildete, breitere End-Bohrungen 27a und 27b gebildet, die bei Ausbildung des Hauptgehäuses 8 als Aluminium- Druckgussteil in an sich bekannter Weise direkt durch eingefügte Schieber ausgebildet werden können. Eine Nachbearbeitung ist grundsätzlich nicht erforderlich.

Entlang der Symmetrieachse A erstreckt sich eine breitere Längsbohrung 29 durch das Hauptgehäuse 8, an deren Enden sich die Deckel 10 und 110 anschließen. In die Längsbohrung 29 sind der erste Einsatz-Führungskörper 12 als Teil des ersten Relaisventils 2 und der zweite Einsatz-Führungskörper 112 als Teil des zweiten Relaisventils 3 eingesetzt, und axial nach außen durch die Ventilsitz-Ringe 15, 115 und deren Sicherungs-Ringe 16, 116 gesichert. Die Ventilkörper 17, 117 sind auf den Einsatz-Führungskörpern 12 und 112 jeweils in Axialrichtung bzw. Richtung der Symmetrieachse A geführt, vorteilhafterweise wie gezeigt mit zwei Dichtlippen 17a, 17b bzw. 117a, 117b, die auf dem Einsatz-Führungskörper 12 bzw. 112 dichtend gleiten.

Somit liegt in der mittleren Quer-Bohrung 27 immer ein Vorratsdruck p50 vor, der von der Druckluft-Versorgungsleitung 50 über einen der Druckluft-Eingangsanschlüsse 25 oder 26 eingegeben wird; der Vorratsdruck p50 liegt somit jeweils am axial eingangsseitigen Ende der Einsatz-Führungskörper 12 und 112 an. In der Belüftungsstellung des ersten Relaisventils 2 gelangt die Druckluft durch einen äußeren Kanal 12a des Einsatz- Führungskörpers 12 in Fig. 1 nach links zu einem in der Belüftungsstellung offenen Belüftungs-Ventilsitz 31, der zwischen dem Ventilsitz-Ring 15 und dem Ventilkörper 17 ausgebildet ist. Der Ventilkörper 17 wird durch eine Schraubenfeder 35, die zwischen dem Einsatz-Führungskörper 12 und dem Ventilkörper 17 vorgespannt aufgenommen ist, axial nach außen gedrückt und ist in der in Fig. 1 rechts bei dem zweiten Relaisventil 3 gezeigten Entlüftungsstellung entsprechend geschlossen. Der äußere Kanal 12a ist zwischen einer radial äußeren Wandung 12b und einer radial inneren Wandung 12c des Einsatz- Führungskörpers 12 ausgebildet. Die radial äußere Wandung 12b liegt an der Axialbohrung bzw. einer vorzugsweise zylindrischen Wand des Hauptgehäuses 8 abgedichtet an.

Bei dem ersten Relaisventil 2 ist der Ventilkörper 17 gegen die Federvorspannung der Schraubenfeder 35 geöffnet, indem über den Steuerdruck-Eingang 2a Steuerdruck p2 in eine Steuerdruck-Kammer 36 zwischen dem Deckel 10 und dem Ventilkolben 14 gelangt und den Ventilkolben 14 hierdurch axial nach innen, d. h. in Fig. 1 nach rechts, drückt, so dass der Ventilkolben 14 mit z. B. einer ringförmigen (Anlage)-Nase 14a gegen den Ventilkörper 17 gelangt und den Ventilkörper 17 gegen die Federvorspannung axial nach innen, d. h. in Fig. 1 nach rechts, drückt. Die Nase 14a des Ventilkolbens 14 bildet hierbei mit dem Ventilkörper 17 einen Entlüftungs-Ventilsitz 30, der in der Belüftungsstellung des Relaisventils 2 entsprechend geschlossen ist. Somit strömt die Druckluft von der mittleren Querbohrung 27 über den Kanal 12a im Einsatz-Führungskörper 12 durch den geöffneten Belüftungs-Ventilsitz 31 in eine ausgangsseitige Druckluftkammer 38, die an dem Druckluft-Ausgang 2b zu der Bremsleitung 6 führt, z. B. in einer in Umfangsrichtung zur gezeigten Schnittebene versetzt angeordneten Position. Somit ist das erste Relaisventil 2 aufgrund des in der Kammer 36 anliegenden, hinreichend hohen Steuerdrucks p2 ausgesteuert, d.h. es ist in seiner Belüftungsstellung, so dass über seinen Druckluft-Ausgang 2b Druckluft mit einer Mengenverstärkung ausgegeben wird.

Wenn die erste pneumatische Steuerleitung 4 nachfolgend entlüftet wird und somit der Druck in der Kammer 36 abfällt, wird die in Fig. 1 rechts gezeigte Entlüftungsstellung des zweiten Relaisventils 3 eingenommen. Hier drückt aufgrund des abfallenden Drucks p2 in der Kammer 136 die Schraubenfeder 135 den Ventilkörper 117 in Fig. 1 axial nach außen, d.h. bei dem rechten zweiten Relaisventil 3 nach rechts (entsprechend bei dem ersten Relaisventil 2 aufgrund des abfallenden Drucks p1 in der Kammer 36 nach links), und gelangt gegen den Ventilsitz-Ring 115, so dass der Belüftungs-Ventilsitz 131 geschlossen wird. Somit ist die Druckhalten-Stellung erreicht.

Zum Erreichen der Entlüftungsstellung wird dann nachfolgend der Entlüftungs-Ventilsitz 130 geöffnet, d.h. die Die Nase 114a des Ventilkolbens 114 hebt von dem Ventilkörper 117 ab. Druckluft aus der Bremsleitung 7 und entsprechend der ausgangsseitigen Druckluft-Kammer 138 kann somit über den offenen Entlüftungs-Ventilsitz 131 in axialer Richtung über den Kanal 165 und den im Einsatz-Führungskörper 112 radial zwischen der inneren Wandung 112c und der äußeren Wandung 112b ausgebildeten Kanälen in den Ringraum 113 und zu der Entlüftung 3c fließen. Diese ist vorteilhafterweise im axial inneren Bereich um die Symmetrieachse A herum ausgebildet vorgesehen.

Die beiden Einsatz-Führungskörper 12 und 112 können insbesondere als Kunststoff-Spritzgussteile ausgebildet werden, die über die z. B. als O-Ringe ausgebildeten Dichtmittel 18 und 19, bzw. 118 und 119, mit ihrer Außenseite abgedichtet in der Axialbohrung 29 bzw. Längsbohrung 29 fest, d.h. nicht gleitend aufgenommen sind und aufgrund ihrer Formgebung die pneumatischen Kanäle für den oben beschriebenen Ventil-Betrieb zur Verfügung stellen. Da auch der Ventilkörper 17, bzw. 117, bereits abgedichtet gleitfähig im Einsatz-Führungskörper 12 bzw. 112 aufgenommen ist, ist als zusätzliches bewegliches Teil lediglich der Ventilkolben 14 bzw. 114 vorgesehen, der wiederum in dem von außen angesetzten Deckel 10, bzw. 110, geführt und abgedichtet ist.

Somit kann insbesondere die Formgebung des Hauptgehäuses 8 ohne Hinterschneidungen oder Hintergreifungen, d. h. ohne nachträgliche maschinelle Bearbeitung einer Hinterschneidung durch Fräsen usw., ausgebildet werden: Es wird die Längsbohrung bzw. Axialbohrung 29 in Axialrichtung A ausgebildet, weiterhin die Querbohrung 27 mit den verbreiterten Endbohrungen 27a und 27b, was bei der Herstellung bereits durch Schieber ohne maschinelle Nachbearbeitung erfolgen kann. In das so ausgebildete Hauptgehäuse 8 werden die beiden Einsatz-Führungskörper 12 und 112 axial von außen nach innen eingeführt, wobei sie hier vorteilhafterweise an einer Kante des Hauptgehäuses 8, die an die mittlere Querbohrung 27 angrenzt, positioniert gehalten werden. Dann werden von außen der Ventilsitz-Ring 15 und der Sicherungs-Ring 16, jeweils mit eingesetzten Dichtmitteln 18, 19, 20, eingesetzt, so dass nachfolgend der Deckel 10 bzw. 110 mit bereits über ein Dichtmittel 23 eingesetztem Ventilkolben 14 bzw. 114 aufgesetzt und mit zusätzlichen Dichtmitteln 21 und 22 abgedichtet werden kann, wobei zur Befestigung des Deckels 10 bzw. 110 Schrauben 60, 61 und 160, 161 an dem Hauptgehäuse 8 befestigt werden.

Fig. 2 zeigt eine mögliche Ansteuerung des Bremsmodulators 1 über eine ABS-Ventilschaltung 70 mit einem elektrisch betätigten 3/2-Wegeventil 71 und zwei nachgeschalteten 2/2-Sperrventilen 72 und 73, die in bekannter Weise eine Steuerdruck-Leitung 51 mit einem z. B. vom Fahrer vorgegebenen Bremsdruck p51 die ABS-Regelung zulassen mit den Phasen
- Öffnen/Bremsdruck Erhöhen in der Ruhestellung des ABS-Steuerventils 71 und geöffneten, d. h. in ihrer Ruhestellung befindenden Sperrventilen 72 und 73, wodurch die pneumatischen Steuerleitungen 4 und 5 jeweils den pneumatischen Steuerdruck-Eingang 2a bzw. 3a belüften und somit die Relaisventile 2 und 3 zur Belüftung der Bremsleitungen 6 und 7 aussteuern,
- Sperren/ Bremsdruck Halten durch Schließen des jeweiligen Sperrventils 72 bzw. 73, und
- Entlüften/ Bremsdruck Senken durch Umschalten des Steuerventils 71 und wiederum Öffnen der Sperrventile 72 und 73, um die pneumatischen Steuerleitungen 4 und 5 zu entlüften.

Die ABS-Steuerschaltung 70 kann insbesondere als eine Einheit ausgebildet werden, die mit dem Bremsmodulator 1 zusammen montiert, insbesondere miteinander verschraubt werden kann. Die Ventile 71, 72, 73 werden in bekannter Weise über elektrische Steuersignale S1, S2, S3 angesteuert, die von einer hier nicht gezeigten ECU ausgegeben werden.

Der Bremsmodulator 1 ist insbesondere in einem Anhängerfahrzeug eines Fahrzeugzuges einsetzbar, grundsätzlich jedoch auch z. B. für die Hinterachs-Bremsanlage eines Einzelfahrzeugs.

### Bezugszeichenliste (Bestandteil der Beschreibung)

- 1: Bremsmodulator, ABS-Bremsmodulator
- 2: erstes pneumatisch angesteuertes Relaisventil
- 2a: pneumatischer Steuerdruck-Eingang, Steuerdruck-Anschluss
- 2b: Druckluft-Ausgang
- 2c: Entlüftung

- 3: zweites pneumatisch angesteuertes Relaisventil
- 3a: pneumatischer Steuereingang 3a
- 3b: Druckluft-Ausgang
- 3c: Entlüftung 3c

- 4: pneumatische Steuerdruckleitung
- 5: pneumatische Steuerdruckleitung
- 6: Bremsleitung
- 7: Bremsleitung
- 8: Hauptgehäuse

- 10: erster Deckel des ersten Relaisventils 2,
- 12: erster Einsatz-Führungskörper
- 110: zweiter Deckel des zweiten Relaisventils 3
- 112: zweiter Einsatz-Führungskörper,
- 12a, 112a: äußerer ringförmiger Kanal des Einsatz-Führungskörpers
- 13, 113: Ringkanal
- 14, 114: Ventilkolben
- 14a, 114a: ringförmige Anlagenase

- 15, 115: Ventilsitz-Ring
- 16, 116: Sicherungs-Ringe
- 17, 117: Ventilkörper
- 17a, 117a: Dichtlippen
- 18, 19, 20, 21, 22, 23: erste Dichtmittel des ersten Relaisventils 2
- 118, 119, 120, 121, 122, 123: zweite Dichtmittel des zweiten Relaisventils 3

- 25, 26: Druckluft- -Eingangsanschlüsse
- 27: mittlere Quer-Bohrung
- 27a, 27b: End-Bohrungen
- 29: breitere Längsbohrung
- 30, 130: Entlüftungs-Ventilsitz
- 31, 131: Belüftungs-Ventilsitz
- 36, 136: Steuerdruck-Kammer
- 35, 135: Schraubenfeder
- 38, 138: ausgangsseitige Druckluftkammer

- 50: Druckluft-Versorgungsleitung von Druckluftspeicher
- 51: Brems-Steuerdruckleitung
- 60, 61, 160, 161: Schrauben
- 70: ABS-Ventilschaltung
- 71: elektrisch betätigtes 3/2-Wegeventil, ABS-Steuerventil
- 72, 73: 2/2-Sperrventile
- 80: Druckluft-Bremssystem

- A: Gehäuse-Achse
- B: Mittel-Achse
- p, p1, p2: Steuerdruck

## Patentansprüche

1. Bremsmodulator (1) für ein Druckluft-Bremssystem (80) eines Fahrzeugs, wobei der Bremsmodulator (1) ein als Leichtmetall-Druckgussteil ausgebildetes Hauptgehäuse (8) und zwei in dem Hauptgehäuse (8) ausgebildete, in einer Axialrichtung (A) des Hauptgehäuses (8) angeordnete Relaisventile (2, 3) zur Luftmengenverstärkung aufweist,
wobei jedes Relaisventil (2, 3) aufweist:
- einen pneumatischen Steuereingang (2a, 3a), einen Druckluft-Eingang (2d, 3d), einen Druckluft-Ausgang (2b, 3b) und einen Entlüftungs-Ausgangsanschluss (2c, 3c), einen Belüftungs-Ventilsitz (31, 131) und einen Entlüftungs-Ventilsitz (30, 130) zur Einstellung einer Belüftungsstellung und einer Entlüftungsstellung,
wobei die Druckluft-Eingänge (2d, 3d) der Relaisventile (2, 3) über eine Querbohrung (27) des Hauptgehäuses (8) an einen gemeinsamen Druckluft-Anschluss (25, 26) des Hauptgehäuses (8) angeschlossen sind und in jedem Relaisventil (2, 3) sich zwischen der Querbohrung (27) und dem Belüftungs-Ventilsitz (30, 130) ein Belüftungs-Kanal (12a, 112a) in der Axialrichtung (A) erstreckt,
wobei
das erste Relaisventil (2) einen ersten Einsatz-Führungskörper (12) und das zweite Relaisventil (3) einen zweiten Einsatz-Führungskörper (112) aufweist, wobei die beiden Einsatz-Führungskörper (12, 112) in eine sich in Axialrichtung (A) erstreckende Längsbohrung (29) des Hauptgehäuses (8) eingesetzt sind,
**dadurch gekennzeichnet, dass**
ein erster Belüftungs-Kanal (12a) des ersten Relaisventils (12) in dem ersten Einsatz-Führungskörper (12) ausgebildet ist und ein zweiter Belüftungs-Kanal (112a) des zweiten Relaisventils (3) in dem zweiten Einsatz-Führungskörper (112) ausgebildet ist.

2. Bremsmodulator (1) nach Anspruch 1, **dadurch gekennzeichnet, dass** das Hauptgehäuse (8) einen ersten Druckluft- Anschluss (25) und über die mittlere Querbohrung (27) verbunden einen zweiten Druckluft-Anschluss (26) aufweist, die alternativ oder ergänzend als gemeinsamer Druckluft-Eingang (2d, 3d) anschließbar sind, wobei die beiden Druckluft-Anschlüsse (25, 26) an gegenüberliegenden Enden der mittleren Querbohrung (27) ausgebildet sind.

3. Bremsmodulator (1) nach Anspruch 2, **dadurch gekennzeichnet, dass** der erste Druckluft-Anschluss (25) und der zweite Druckluft-Anschluss (26) symmetrisch zueinander angeordnet sind.

4. Bremsmodulator (1) nach einem der vorherigen Ansprüche, **dadurch gekennzeichnet, dass** die beiden Relaisventile (2, 3) symmetrisch und/oder gleich beabstandet zu der mittleren Querbohrung (27) angeordnet sind.

5. Bremsmodulator (1) nach einem der vorherigen Ansprüche, **dadurch gekennzeichnet, dass** die beiden Einsatz-Führungskörper (12, 112) als Kunststoff-Spritzgussteile ausgebildet sind.

6. Bremsmodulator (1) nach einem der vorherigen Ansprüche, **dadurch gekennzeichnet, dass** die beiden Einsatz-Führungskörper (12, 112) jeweils axial von außen in die Längsbohrung (29) eingesetzt sind.

7. Bremsmodulator (1) nach einem der vorherigen Ansprüche, **dadurch gekennzeichnet, dass** jedes Relaisventil (2, 3) aufweist:
einen verstellbaren Ventilkörper (17, 117) zur Anlage an einem Ventil- Mittel (15, 115) zur Ausbildung des Belüftungs-Ventilsitzes (31, 131) und einen durch einen pneumatischen Steuerdruck (p1, p2) verstellbaren Ventilkolben (14, 114) zur Anlage an dem Ventilkörper (17, 117) zur Ausbildung des Entlüftungs-Ventilsitzes (30, 130),
wobei die Relaisventile (2, 3) jeweils in Abhängigkeit des an dem pneumatisehen Steuereingang (2a, 3a) anliegenden pneumatischen Steuerdrucks (p1, p2) einstellbar sind in eine Belüftungsstellung mit offenem Belüftungs-Ventilsitz (31, 131) zum Verbinden des Druckluft-Eingangs (2a, 3a) mit dem Druckluft-Ausgang (2b, 3b) unter Sperrung des Entlüftungs-Ausgangs (2c, 3c) und eine Entlüftungsstellung mit offenem Entlüftungs-Ventilsitz (30, 130) zum Verbinden des Druckluft-Ausgangs (2b, 3b) mit dem Entlüftungs-Ausgang (2c, 3c) unter Sperrung des Druckluft-Eingangs (2d, 3d).

8. Bremsmodulator (1) nach Anspruch 7, **dadurch gekennzeichnet, dass** in jedem Relaisventil (2, 3) der Ventilkörper (17, 117) auf dem Einsatz-Führungskörper (12, 112) in Axialrichtung verstellbar aufgenommen ist und federvorgespannt gegen das Ventilmittel (15, 115) drückt zur Ausbildung des Belüftungs-Ventilsitzes (30, 130).

9. Bremsmodulator (1) nach Anspruch 8, **dadurch gekennzeichnet, dass** das Ventilmittel (15, 115) ein in das Hauptgehäuse (8) eingesetzter Ventilsitz-Ring (15) ist.

10. Bremsmodulator (1) nach einem der Ansprüche 7 bis 9,
**dadurch gekennzeichnet, dass**
der Ventilkolben (14, 114) durch den Steuerdruck (p1, p2) gegen den Ventilkörper (17, 117) drückbar ist zum Schließen des Entlüftungs-Ventilsitzes durch Anlage an den Ventilkörper (17, 117) und zum Öffnen des Belüftungs-Ventilsitzes (30) durch axiale Verstellung des Ventilkörpers (17, 117).

11. Bremsmodulator (1) nach einem der Ansprüche 7 bis 10, **dadurch gekennzeichnet, dass** der Ventilkolben (14, 114) auf einem von außen an das Hauptgehäuse (8) angesetzten Deckel (10, 110) axial geführt ist,
wobei zwischen dem Ventilkolben (14, 114) und dem Deckel (10, 110) eine an den pneumatischen Steuereingang (2a, 3a) angeschlossene SteuerKammer (36, 136) ausgebildet ist zur Aufnahme des Steuerdrucks (p1, p2).

12. Bremsmodulator (1) nach einem der Ansprüche 7 bis 11, **dadurch gekennzeichnet, dass** der Ventilkörper (17, 117) auf dem Einsatz- Führungskörper (12, 112) dichtend und axial verstellbar aufgenommen, und durch eine zwischen dem Einsatz-Führungskörper (12, 112) und dem Ventilkörper (17, 117) angeordnete Schraubenfeder (35, 135) axial nach außen federvorgespannt ist.

13. Bremsmodulator (1) nach einem der Ansprüche 7 bis 12, **dadurch gekennzeichnet, dass** in jedem Relaisventil (2, 3) das Ventilmittel (15, 115) als Ventilsitz-Ring (15, 115) ausgebildet ist, der den Einsatz- Führungskörper (12, 112) axial nach außen sichert und den Belüftungs-Ventilsitz (30) gegenüber dem Ventilkörper (17, 117) ausbildet.

14. Bremsmodulator (1) nach Anspruch 13, **dadurch gekennzeichnet, dass** der Ventilsitz-Ring (15, 115) axial nach außen durch einen Sicherungs-Ring (16, 116) gesichert ist, der in dem Hauptgehäuse (8) aufgenommen ist.

15. Bremsmodulator (1) nach einem der vorherigen Ansprüche, **dadurch gekennzeichnet, dass** jedes Relaisventil (2, 3) eine ausgangsseitige Druckluft-Kammer (38, 138) aufweist, die
- in der Belüftungsstellung bei offenem Belüftungs-Ventilsitz (30) mit dem Belüftungs-Kanal (12a) verbunden ist,
- in der Entlüftungsstellung über den geöffneten Entlüftungs-Ventilsitz (31, 131) an einen mittigen, in Axialrichtung (A) nach innen verlaufenden, in dem Einsatz-Führungskörper (12, 112) ausgebildeten Entlüftungskanal (65, 165) angeschlossen ist, wobei die beiden ausgebildeten Entlüftungskanäle (65, 165) an den gemeinsamen Entlüftungs-Ausgang (2c, 3c) angeschlossen sind.

16. Bremsmodulator (1) nach Anspruch 15, **dadurch gekennzeichnet, dass** die Einsatz-Führungskörper (12, 112) jeweils aufweisen:
- eine radial äußere Wandung (12b, 112b) zur Anlage an einer vorzugsweise zylindrischen Wand des Hauptgehäuses (8),
- den sich radial nach innen an die radial äußeren Wandung (12b, 112b) angrenzenden Belüftungs-Kanal (12a), und
- eine sich radial nach innen an den Belüftungs-Kanal (12a, 112a) anschließende innere Wandung (12c, 112c), die den Entlüftungskanal (65, 165) umgibt.

17. Bremsmodulator (1) nach Anspruch 15 oder 16, **dadurch gekennzeichnet, dass** in der Entlüftungsstellung ein Entlüftungsstrom durch den geöffneten Entlüftungs-Ventilsitz (31, 131), den Entlüftungskanal (65, 165), nachfolgend durch einen radial verlaufenden Kanal zu einer radial äußeren Kammer (13, 113) und nachfolgend zu dem gemeinsamen Entlüftungs-Ausgang (2c, 3c) verläuft.

18. Bremsmodulator (1) nach einem der vorherigen Ansprüche, **dadurch gekennzeichnet, dass** die Einsatz-Führungskörper (12, 112) identisch ausgebildet und in Axialrichtung (A) symmetrisch zueinander angeordnet sind.

19. Druckluft-Bremssystem (80) für ein Fahrzeug, insbesondere ein Anhängerfahrzeug, wobei das Druckluft-Bremssystem (80) aufweist:
einen Bremsmodulator (1) nach einem der vorherigen Ansprüche,
eine elektropneumatische ABS-Steuerschaltung (70), die durch elektrische Steuersignale (S1, S2, S3) ansteuerbar ist und in Abhängigkeit der Ansteuerung einen ersten Steuerdruck (p1) über die erste pneumatische Steuerleitung (4) an den ersten pneumatischen Steuerdruck-Eingang (2a) und einen zweiten pneumatischen Steuerdruck (p2) über die zweite pneumatische Steuerleitung (5) an den zweiten pneumatischen Steuereingang (3a) ausgibt.

20. Druckluft-Bremssystem (80) nach Anspruch 19, **dadurch gekennzeichnet, dass** es ein Anhänger-Bremssystem ist und der Bremsmodulator ein Anhänger-Bremsmodulator (1) des Anhängerfahrzeugs ist.

## Claims

1. Brake modulator (1) for a compressed air braking system (80) of a vehicle, wherein the brake modulator (1) comprises a main housing (8) in the form of a light alloy die-casting and two relay valves (2, 3), for air-quantity boosting, arranged in the main housing (8) in an axial direction (A) of the main housing (8),
wherein each relay valve (2, 3) comprises:
- a pneumatic control inlet (2a, 3a), a compressed air inlet (2d, 3d), a compressed air outlet (2b, 3b) and a vent outlet port (2c, 3c), a delivery valve seat (31, 131) and a vent valve seat (30, 130) for setting a delivery position and a vent position, wherein the compressed air inlets (2d, 3d) of the relay valves (2, 3) are connected via a transverse bore (27) of the main housing (8) to a common compressed air port (25, 26) of the main housing (8), and a delivery duct (12a, 112a) extends in the axial direction (A) between the transverse bore (27) and the delivery valve seat (30, 130), in each relay valve (2, 3)
wherein
the first relay valve (2) has a first guide body insert (12) and the second relay valve (3) has a second guide body insert (112), the two guide body inserts (12, 112) being fitted into a longitudinal bore (29) of the main housing (8) extending in the axial direction (A),
**characterized in that**
a first delivery duct (12a) of the first relay valve (2) is formed in the first guide body insert (12) and a second delivery duct (112a) of the second relay valve (3) is formed in the second guide body insert (112).

2. Brake modulator (1) according to Claim 1, **characterized in that** the main housing (8) has a first compressed air port (25) and a second compressed air port (26) connected via the central transverse bore (27), which ports (25, 26) are connectable alternatively or additionally as a common compressed air inlet (2d, 3d), the two compressed air ports (25, 26) being formed at opposite ends of the central transverse bore (27).

3. Brake modulator (1) according to Claim 2, **characterized in that** the first compressed air port (25) and the second compressed air port (26) are arranged symmetrically with respect to one another.

4. Brake modulator (1) according to any one of the preceding claims, **characterized in that** the two relay valves (2, 3) are arranged symmetrically with respect to and/or at equal distances from the central transverse bore (27).

5. Brake modulator (1) according to any one of the preceding claims, **characterized in that** the two guide body inserts (12, 112) are configured as plastics injection moldings.

6. Brake modulator (1) according to any one of the preceding claims, **characterized in that** the two guide body inserts (12, 112) are in each case inserted axially from outside into the longitudinal bore (29).

7. Brake modulator (1) according to any one of the preceding claims, **characterized in that** each relay valve (2, 3) comprises:
a displaceable valve body (17, 117) for abutment against a valve means (15, 115) to form the delivery valve seat (31, 131), and a valve piston (14, 114) which is displaceable by means of a pneumatic control pressure (p1, p2) for abutment against the valve body (17, 117) to form the vent valve seat (30, 130),
wherein the relay valves (2, 3) are each adjustable, in dependence on the pneumatic control pressure (p1, p2) acting at the pneumatic control inlet (2a, 3a), to a delivery position with open delivery valve seat (31, 131) in order to connect the compressed air inlet (2a, 3a) to the compressed air outlet (2b, 3b) while blocking the vent outlet (2c, 3c), and to a vent position with open vent valve seat (30, 130) in order to connect the compressed air outlet (2b, 3b) to the vent outlet (2c, 3c) while blocking the compressed air inlet (2d, 3d).

8. Brake modulator (1) according to Claim 7, **characterized in that** in each relay valve (2, 3) the valve body (17, 117) is located displaceably in the axial direction on the guide body insert (12, 112) and presses with a spring preloading against the valve means (15, 115) to form the delivery valve seat (30, 130) .

9. Brake modulator (1) according to Claim 8, **characterized in that** the valves means (15, 115) is a valve seat ring (15) fitted into the main housing (8).

10. Brake modulator (1) according to any one of Claims 7 to 9,
**characterized in that**
the valve piston (14, 114) can be pressed by the control pressure (p1, p2) against the valve body (17, 117) to close the vent valve seat by abutting against the valve body (17, 117), and to open the delivery valve seat (30) by axially displacing the valve body (17, 117).

11. Brake modulator (1) according to any one of Claims 7 to 10, **characterized in that** the valve piston (14, 114) is guided axially on a cover (10, 110) fitted from outside to the main housing (8), a control chamber (36, 136) connected to the pneumatic control inlet (2a, 3a) being formed between the valve piston (14, 114) and the cover (10, 110) to receive the control pressure (p1, p2).

12. Brake modulator (1) according to any one of Claims 7 to 11, **characterized in that** the valve body (17, 117) is mounted sealingly and axially displaceably on the guide body insert (12, 112) and is springloaded axially outwards by a helical spring (35, 135) arranged between the guide body insert (12, 112) and the valve body (17, 117).

13. Brake modulator (1) according to any one of Claims 7 to 12, **characterized in that** in each relay valve (2, 3) the valve means (15, 115) is configured as a valve seat ring (15, 115) which secures the guide body insert (12, 112) axially towards the outside and forms the delivery valve seat (30) with respect to the valve body (17, 117).

14. Brake modulator (1) according to Claim 13, **characterized in that** the valve seat ring (15, 115) is secured axially towards the outside by a securing ring (16, 116) which is accommodated in the main housing (8).

15. Brake modulator (1) according to any one of the preceding claims, **characterized in that** each relay valve (2, 3) has an outlet-side pressure chamber (38, 138) which
- in the delivery position with the delivery valve seat (30) open is connected to the delivery duct (12a),
- in the vent position is connected via the open vent valve seat (31, 131) to a central vent duct (65, 165) disposed towards the inside in the axial direction (A) and formed in the guide body insert (12, 112), the two vent ducts (65, 165) formed being connected to the common vent outlet (2c, 3c).

16. Brake modulator (1) according to Claim 15, **characterized in that** each guide body insert (12, 112) comprises:
- a radially outer wall (12b, 112b) for contact with a preferably cylindrical wall of the main housing (8),
- the delivery duct (12a) radially adjacent on the inside to the radially outer wall (12b, 112b), and
- an inner wall (12c, 112c) radially adjacent on the inside to the delivery duct (12a, 112a), which inner wall (12c, 112c) surrounds the vent duct (65, 165).

17. Brake modulator (1) according to Claim 15 or 16,
**characterized in that** in the vent position a vent flow passes through the open vent valve seat (31, 131), the vent duct (65, 165), then through a radially disposed duct to a radially outer chamber, for example, an annular chamber (13, 113) and then to the common vent outlet (2c, 3c).

18. Brake modulator (1) according to any one of the preceding claims, **characterized in that** the guide body inserts (12, 112) are configured identically and are arranged symmetrically to one another in the axial direction (A).

19. Compressed air braking system (80) for a vehicle, in particular a trailer vehicle, wherein the compressed air braking system (80) comprises:
a brake modulator (1) according to any one of the preceding claims, an electro-pneumatic ABS control circuit (70) which can be activated by electrical control signals (S1, S2, S3) and, in dependence on the activation, outputs a first control pressure (p1) via the first pneumatic control line (4) to the first pneumatic control pressure inlet (2a) and a second pneumatic control pressure (p2) via the second pneumatic control line (5) to the second pneumatic control inlet (3a).

20. Compressed air braking system (80) according to Claim 19, **characterized in that** it is a trailer braking system and the brake modulator is a trailer brake modulator (1) of the trailer vehicle.

## Revendications

1. Modulateur de freins (1) pour un système de freinage à air comprimé (80) d'un véhicule, le modulateur de freins (1) comprenant un boîtier principal (8) réalisé sous forme de pièces coulée sous pression en métal léger et deux soupapes-relais (2, 3) formées dans le boîtier principal (8) et disposées dans une direction axiale (A) du boîtier principal (8), lesquelles soupapes-relais servent à augmenter le débit d'air,
chaque soupape-relais (2, 3) comprenant :
- une entrée de commande pneumatique (2a, 3a), une entrée d'air comprimé (2d, 3d), une sortie d'air comprimé (2b, 3b) et un raccord de sortie de purge (2c, 3c), un siège de soupape d'aération (31, 131) et un siège de soupape de purge (30, 130) pour le réglage d'une position d'aération et d'une position de purge,
les entrées d'air comprimé (2d, 3d) des soupapes-relais (2, 3) étant raccordées, par le biais d'un alésage transversal (27) du boîtier principal (8), à un raccord d'air comprimé (25, 26) commun du boîtier principal (8) et un conduit d'aération (12a, 112a) s'étendant dans la direction axiale (A) entre l'alésage transversal (27) et le siège de soupape d'aération (30, 130) dans chaque soupape-relais (2, 3),
la première soupape-relais (2) comprenant un premier corps de guidage d'insertion (12) et la deuxième soupape-relais (3) comprenant un deuxième corps de guidage d'insertion (112), les deux corps de guidage d'insertion (12, 112) étant insérés dans un alésage longitudinal (29), s'étendant dans la direction axiale (A), du boîtier principal (8), **caractérisé en ce**
**qu'**un premier conduit d'aération (12a) de la première soupape-relais (12) est formé dans le premier corps de guidage d'insertion (12) et un deuxième conduit d'aération (112a) de la deuxième soupape-relais (3) est formé dans le deuxième corps de guidage d'insertion (112).

2. Modulateur de freins (1) selon la revendication 1, **caractérisé en ce que** le boîtier principal (8) comprend un premier raccord d'air comprimé (25) et, de manière reliée par le biais de l'alésage transversal (27) central, un deuxième raccord d'air comprimé (26), lesquels peuvent être, en variante ou en complément, raccordés en tant qu'entrée d'air comprimé (2d, 3d) commune, les deux raccords d'air comprimé (25, 26) étant réalisés à des extrémités opposées de l'alésage transversal (27) central.

3. Modulateur de freins (1) selon la revendication 2, **caractérisé en ce que** le premier raccord d'air comprimé (25) et le deuxième raccord d'air comprimé (26) sont disposés de manière symétrique l'un par rapport à l'autre.

4. Modulateur de freins (1) selon l'une quelconque des revendications précédentes, **caractérisé en ce que** les deux soupapes-relais (2, 3) sont disposées de manière symétrique et/ou équidistante par rapport à l'alésage transversal (27) central.

5. Modulateur de freins (1) selon l'une quelconque des revendications précédentes, **caractérisé en ce que** les deux corps de guidage d'insertion (12, 112) sont réalisés sous forme de pièces moulées par injection en matière plastique.

6. Modulateur de freins (1) selon l'une quelconque des revendications précédentes, **caractérisé en ce que** les deux corps de guidage d'insertion (12, 112) sont insérés respectivement axialement depuis l'extérieur dans l'alésage longitudinal (29).

7. Modulateur de freins (1) selon l'une quelconque des revendications précédentes, **caractérisé en ce que** chaque soupape-relais (2, 3) comprend :
un corps de soupape (17, 117) déplaçable destiné à venir en appui contre un moyen de soupape (15, 115) pour former le siège de soupape d'aération (31, 131) et un piston de soupape (14, 114) déplaçable au moyen d'une pression de commande pneumatique (p1, p2) et destiné à venir en appui contre le corps de soupape (17, 117) pour former le siège de soupape de purge (30, 130),
les soupapes-relais (2, 3) pouvant respectivement, en fonction de la pression de commande pneumatique (p1, p2) appliquée à l'entrée de commande pneumatique (2a, 3a), être réglées dans une position d'aération avec siège de soupape d'aération (31, 131) ouvert pour relier l'entrée d'air comprimé (2a, 3a) à la sortie d'air comprimé (2b, 3b) en bloquant la sortie de purge (2c, 3c) et une position de purge avec siège de soupape de purge (30, 130) ouvert pour relier la sortie d'air comprimé (2b, 3b) à la sortie de purge (2c, 3c) en bloquant l'entrée d'air comprimé (2d, 3d).

8. Modulateur de freins (1) selon la revendication 7, **caractérisé en ce que**, dans chaque soupape-relais (2, 3), le corps de soupape (17, 117) est logé de manière déplaçable dans la direction axiale sur le corps de guidage d'insertion (12, 112) et presse contre le moyen de soupape (15, 115) de manière précontrainte élastiquement pour former le siège de soupape d'aération (30, 130).

9. Modulateur de freins (1) selon la revendication 8, **caractérisé en ce que** le moyen de soupape (15, 115) est une bague de siège de soupape (15) insérée dans le boîtier principal (8).

10. Modulateur de freins (1) selon l'une quelconque des revendications 7 à 9,
**caractérisé en ce que**
le piston de soupape (14, 114) peut être pressé au moyen de la pression de commande (p1, p2) contre le corps de soupape (17, 117) pour fermer le siège de soupape de purge par appui contre le corps de soupape (17, 117) et pour ouvrir le siège de soupape d'aération (30) par déplacement axial du corps de soupape (17, 117).

11. Modulateur de freins (1) selon l'une quelconque des revendications 7 à 10, **caractérisé en ce que** le piston de soupape (14, 114) est guidé axialement sur un couvercle (10, 110) mis en place sur le boîtier principal (8) depuis l'extérieur, une chambre de commande (36, 136) raccordée à l'entrée de commande pneumatique (2a, 3a) étant formée entre le piston de soupape (14, 114) et le couvercle (10, 110), laquelle chambre de commande est destinée à recevoir la pression de commande (p1, p2).

12. Modulateur de freins (1) selon l'une quelconque des revendications 7 à 11, **caractérisé en ce que** le corps de soupape (17, 117) est logé de manière déplaçable axialement et étanche sur le corps de guidage d'insertion (12, 112), et est précontraint élastiquement axialement vers l'extérieur au moyen d'un ressort hélicoïdal (35, 135) disposé entre le corps de guidage d'insertion (12, 112) et le corps de soupape (17, 117).

13. Modulateur de freins (1) selon l'une quelconque des revendications 7 à 12, **caractérisé en ce que**, dans chaque soupape-relais (2, 3), le moyen de soupape (15, 115) est réalisé sous forme de bague de siège de soupape (15, 115) qui fixe le corps de guidage d'insertion (12, 112) axialement vers l'extérieur et forme le siège de soupape d'aération (30) par rapport au corps de soupape (17, 117).

14. Modulateur de freins (1) selon la revendication 13, **caractérisé en ce que** la bague de siège de soupape (15, 115) est fixée axialement vers l'extérieur par une bague de fixation (16, 116) qui est logée dans le boîtier principal (8).

15. Modulateur de freins (1) selon l'une quelconque des revendications précédentes, **caractérisé en ce que** chaque soupape-relais (2, 3) comprend une chambre d'air comprimé (38, 138) côté sortie, qui
- dans la position d'aération lorsque le siège de soupape d'aération (30) est ouvert, est reliée au conduit d'aération (12a),
- dans la position de purge, est raccordée, par le biais du siège de soupape de purge (31, 131) ouvert, à un conduit de purge (65, 165) central, s'étendant vers l'intérieur dans la direction axiale (A) et formé dans le corps de guidage d'insertion (12, 112), les deux conduits de purge (65, 165) formés étant raccordés à la sortie de purge (2c, 3c) commune.

16. Modulateur de freins (1) selon la revendication 15, **caractérisé en ce que** les corps de guidage d'insertion (12, 112) comprennent respectivement :
- une paroi (12b, 112b) radialement extérieure destinée à venir en appui contre une paroi de préférence cylindrique du boîtier principal (8),
- le conduit d'aération (12a) adjacent radialement vers l'intérieur à la paroi radialement extérieure (12b, 112b), et
- une paroi intérieure (12c, 112c) se raccordant radialement vers l'intérieur au conduit d'aération (12a, 112a), laquelle entoure le conduit de purge (65, 165).

17. Modulateur de freins (1) selon la revendication 15 ou 16, **caractérisé en ce que**, dans la position de purge, un flux de purge s'écoule à travers le siège de soupape de purge (31, 131) ouvert, le conduit de purge (65, 165), ensuite à travers un conduit s'étendant radialement jusqu'à une chambre (13, 113) radialement extérieure et ensuite jusqu'à la sortie de purge (2c, 3c) commune.

18. Modulateur de freins (1) selon l'une quelconque des revendications précédentes, **caractérisé en ce que** les corps de guidage d'insertion (12, 112) sont réalisés de manière identique et sont disposés de manière symétrique l'un par rapport à l'autre dans la direction axiale (A).

19. Système de freinage à air comprimé (80) pour un véhicule, en particulier un véhicule remorque, le système de freinage à air comprimé (80) comprenant :
un modulateur de freins (1) selon l'une quelconque des revendications précédentes, un circuit de commande ABS électropneumatique (70) qui peut être commandé au moyen de signaux de commande électriques (S1, S2, S3) et fournit, en fonction de la commande, une première pression de commande (p1) à la première entrée de pression de commande pneumatique (2a) par le biais de la première conduite de commande pneumatique (4) et une deuxième pression de commande pneumatique (p2) à la deuxième entrée de commande pneumatique (3a) par le biais de la deuxième conduite de commande pneumatique (5).

20. Système de freinage à air comprimé (80) selon la revendication 19, **caractérisé en ce que** celui-ci est un système de freinage de remorque et le modulateur de freins est un modulateur de freins de remorque (1) du véhicule remorque.
